# EUROPÄISCHE PATENTSCHRIFT

(11) **EP 1 595 435 B1**
(45) Veröffentlichungstag und Bekanntmachung des Hinweises auf die Patenterteilung: **27.07.2011**
(21) Anmeldenummer: 05007133.1
(22) Anmeldetag: 31.03.2005
(51) Int. Cl.: A01D 75/28

(54) **Reinigungseinrichtung an einem Mähdrescher**
Cleaning device for a combine
Dispositif de nettoyage pour une moissoneuse-batteuse

(30) Priorität: 11.05.2004 DE 102004023767
(43) Veröffentlichungstag der Anmeldung: 16.11.2005
(73) Patentinhaber: CLAAS Selbstfahrende Erntemaschinen GmbH, 33428 Harsewinkel (DE)
(72) Erfinder: Behnke, Willi, 33803 Steinhagen (DE)

(56) Entgegenhaltungen:
- DE-A1- 2 903 910
- DE-A1- 10 111 531
- DE-C1- 19 908 696
- DE-U1- 8 800 121

## Beschreibung

Die Erfindungen betrifft ein Verfahren und eine Vorrichtung zur Abscheidung wenigstens eines Erntegutstromes auf Förder- und Reinigungsorganen eines Mähdreschers nach den Oberbegriffen der Ansprüche 1 und 10.

Aus der DE 101 11 531 ist ein schwingendes Sieb für einen Mähdrescher bekannt geworden. Das Sieb umfasst zwei bezüglich der Vorwärtsfahrtrichtung des Mähdreschers seitlich nebeneinander in einer Ebene angeordnete Teilsiebe. Jedes Teilsieb wird von einem Rahmen und darin befestigten, verstellbaren Lamellen gebildet. Jedem Teilsieb ist ein eigener Verstellantrieb zugeordnet mit dem die Lamellen der Teilsiebe getrennt voneinander eingestellt werden können, damit das bei Hangfahrt des Mähdreschers in ungleichmäßiger Schichthöhe auf den Teilsieben geförderte Erntegut optimal gereinigt wird. Jeweils ein unterhalb jedes Teilsiebs angeordneter Sensor erfasst die Abscheidung von Korn und Nichtkornbestandteilen an dem Teilsieb. Zusätzlich ist ein Neigungssensor am Mähdrescher angeordnet. Die von den Sensoren erzeugten Signale werden einer geeigneten Steuerung oder Regelung zugeführt, die den Verstellantrieb jedes Teilsiebs getrennt steuert, dass für jedes Teilsieb eine Optimierung der Abscheidung und der Reinheit erzielt wird.

Nachteilig bei dieser Vorrichtung ist, das das Sieb aus sehr vielen nebeneinander angeordneten Teilsieben bestehen muss, damit für jeden Teilbereich der Siebfläche eine optimale Einstellung möglich ist. Kommen eine Vielzahl von Teilsieben zum Einsatz, geht entsprechend viel Siebfläche durch die Rahmen der Teilsiebe verloren, zudem erhöht sich mit der Anzahl der Teilsiebe gleichzeitig die Anzahl der benötigten Verstellantriebe. Die Konstruktion wird somit entsprechend aufwendiger je mehr Teilsiebe vorgesehen werden.

Der Erfindung liegt daher die Aufgabe zugrunde ein Verfahren und eine Vorrichtung zu schaffen, die ein effizientes Reinigen eines Erntegutstrom auch bei Schräglage der Förder- und Reinigungsorgane bei geringen Verlusten ermöglicht.

Diese Aufgabe wird erfindungsgemäß durch die kennzeichnenden Merkmale der Ansprüche 1 und 8 gelöst. Weitere vorteilhafte Wirkungen des Erfindungsgegenstandes ergeben sich aus den Unteransprüchen.

Beim erfindungsgemäßen Verfahrens wird die Querschwingung in Abhängigkeit von der Neigung des Mähdreschers vorgeregelt und anschließend in Abhängigkeit von der Querabscheidung feingeregelt wird. Dieses Verfahren erweist sich beispielsweise bei der Erntefahrt am Hang sowie bei der Wende am Feldende als vorteilhaft, da die Neigungen am Hang des Mähdreschers bei Hin- und Rückfahrt annähernd entgegengesetzt gleich groß sind und die Neigung sich während der Wende des Mähdreschers innerhalb kürzester Zeit ständig ändert.

Dadurch, dass die Querschwingung des Förder- und Reinigungsorgans in Abhängigkeit von der Querabscheidung des Erntegutstromes änderbar ist, kann die Bewegungsrichtung des Erntegutstroms auf den Förder- und Reinigungsorganen und damit die Gutverteilung des Erntegutstroms auf dem Förder- und Reinigungsorgan bei der Einstellung der Querschwingung berücksichtigt werden, was letztlich zu einer effizienteren Reinigung der Ernteguts führt.

Dadurch, dass die Querschwingung in Abhängigkeit von der Querabscheidung geregelt wird, kann die Querschwingung des Förder- und Reinigungsorgans unmittelbar abhängig vom Ergebnis der Querabscheidung des Erntegutes erfolgen.

Die Querabscheidung wird vorteilhafterweise an einem oder an mehreren Sieben des Förder- und Reinigungsorgans durch einen oder mehrere Sensoren ermittelt, wobei die Sensoren quer zur Gutflussrichtung des Ernteguts entlang der Arbeitsbreite des Förder- und Reinigungsorgans angeordnet sind, so dass die Querabscheidung für jede Siebebene getrennt ermittelt werden kann.

Eine besonders einfache Ausführung des erfindungsgemäßen Verfahrens ergibt sich, wenn die Sensoren Körnerströme im Bereich der Siebe des Förder- und Reinigungsorgans detektieren, da diese stellvertretend für die Abscheideffektivität des Förder- und Reinigungsorgans stehen.

Indem die Körnerströme in einem Bereich der Siebe gemessen werden, in dem die Gutverteilung des Erntegutes über die Breite der Siebe bereits erfolgt ist, kann in diesem Bereich des Siebes das Ergebnis der abgeschlossenen Gutverteilung ermittelt werden.

Eine einfache Ausführung des erfindungsgemäßen Verfahrens ergibt sich, wenn den Körnerströmen eine Abscheidekurve zugeordnet wird, die der Querabscheidung entspricht.

Die Anpassung der Querschwingung des Förder- und Reinigungsorgans erfolgt automatisch, so dass der Bediener nicht zusätzlich belastet wird.

In der erfindungsgemäßen Vorrichtung umfaßt der Mähdrescher wenigstens eine Körnerstrommesseinrichtung zur Bestimmung der Querabscheidung des Erntegutstromes und eine Steuereinheit zum Steuern der Querschwingung, wobei die Steuerung die Querschwingung in Abhängigkeit von der Querabscheidung regelt, in dem die Steuereinheit in Abhängigkeit von der Hangneigung des Mähdreschers auf einen Querschwingungs-Sollwert voreingestellt und anschließend bei annähernd konstanter Hangneigung in Abhängigkeit von der Querabscheidung ein Steuerbefehlssignal generiert mit dem die Querschwingung des Förder- und Reinigungsorgans feineingestellt wird, so dass die Querabscheidung konstant ist.

Vorteilhafterweise umfasst die Körnerstrommesseinrichtung mehrere Impulsdichtesensoren, so dass lediglich die im Erntegutstrom enthaltenen Körner detektiert werden können ohne die Körner zuvor von den Nichtkornbestandteilen zu trennen.

Dadurch, das die Impulsdichtesensoren Stabsensoren sind, wird der Erntegutstrom in dem Mähdrescher nicht gestört und die Impulsdichte erreicht ein zur weiteren Bearbeitung verwertbares Maß.

Damit die Körnerströme kontinuierlich gemessen werden können, generieren die Stabsensoren Körnerstromsignale die im wesentlichen proportional zu den Körnerströmen sind.

Indem die Hangneigung des Mähdreschers über wenigstens einen Querneigungssensor erfasst wird, der ein Querneigungssignal generiert, das im wesentlichen proportional zur Neigung der Förder- und Reinigungseinrichtung ist, kann der Einfluss der Neigung auf die Querabscheidung ermittelt und bei der Regelung der Querschwingung berücksichtigt werden.

Eine besonders einfache Regelung der Querschwingung erfolgt auf die Art und Weise, dass die Steuereinheit in Abhängigkeit von der Querabscheidung ein Steuerbefehlssignal generiert mit dem die Querschwingung des Förder- und Reinigungsorgans geregelt, so dass die Querabscheidung konstant ist.

Damit eine Überlastung der Reinigungseinrichtung bei Hangfahrt an steilen Hängen ausgeschlossen werden kann, wird die Förder- und Reinigungseinrichtung aus einem Obersieb und einem Untersieb gebildet, die mit verstellbaren Sieböffnungen versehen sind, wobei die Sieböffnungen in Abhängigkeit von der Querabscheidung über Stellglieder einstellbar sind.

Wenn die Körnerstrommesseinrichtung in einem Überkehrbereich des Obersiebs unterhalb des Obersiebs angeordnet ist, kann mit der Körnerstrommesseinrichtung zusätzlich zur Querabscheidung auch eine durch das Obersieb hindurchgetretene Körnermenge eines Siebdurchgangs bestimmt werden, die Teil einer dem Dreschwerk wieder zugeführten Überkehrerntegutmenge ist.

Wenn die Körnerstrommesseinrichtung am Ende des Obersiebs unterhalb des Obersiebs angeordnet ist kann mit der Körnerstrommesseinrichtung zusätzlich zur Querabscheidung auch ein aus der Reinigungseinrichtung austretender im wesentlichen aus Körnern bestehender Siebverlust gemessen werden, der im hinteren Bereich des Mähdreschers ausgeworfen wird.

Wenn die Körnerstrommesseinrichtung am Ende des Untersiebs unterhalb des Untersiebs angeordnet ist, kann mit der Körnerstrommesseinrichtung zusätzlich zur Querabscheidung auch eine Körnermenge in einer Überkehrerntegutmenge bestimmt werden, die erneut dem Dreschwerk zugeführt wird.

Weitere vorteilhafte Ausführungen sind Gegenstand weiterer Unteransprüche und werden an Hand eines in mehreren Figuren dargestellten Ausführungsbeispiels beschrieben.

Es zeigen:
- Fig.1: eine Seitenansicht eines Mähdreschers;
- Fig.2: einen schematischen Ausschnitt einer Heckansicht eines Mähdreschers mit der erfindungsgemäßen Vorrichtung in einer ersten Ausführung;
- Fig.3: einen schematischen Ausschnitt einer Heckansicht eines Mähdreschers mit der erfindungsgemäßen Vorrichtung in einer zweiten Ausführung.

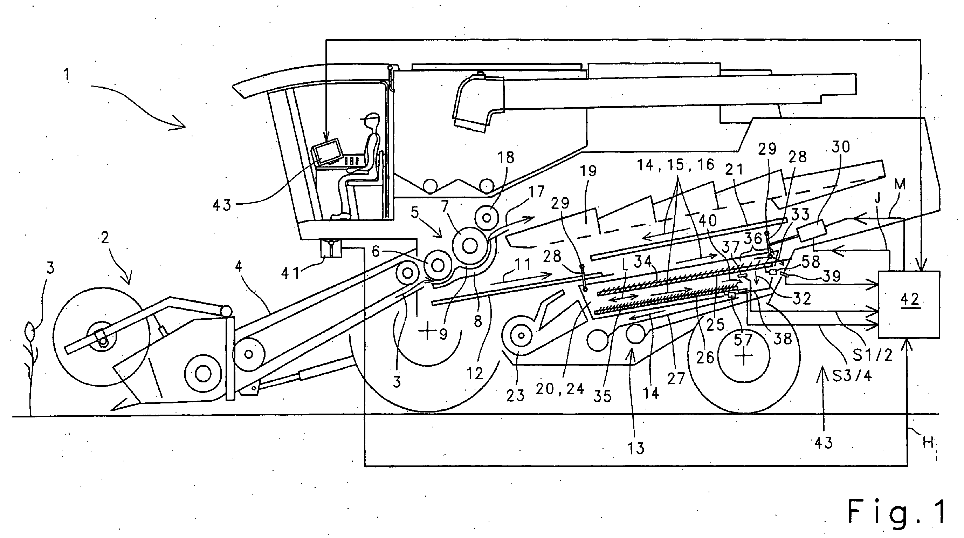

Bei dem in Figur 1 gezeigten Ausführungsbeispiel der Erfindung handelt es sich um einen selbstfahrenden Mähdrescher 1 mit einem sog. Tangentialdreschwerk 5 und einem nachgeordneten Hordenschüttler 19. Unterhalb des Hordenschüttlers 19 befindet sich eine Reinigungseinrichtung 13. Die Erfindung ist aber ausdrücklich nicht auf derartige ausgeführte Mähdreschertypen beschränkt.
Die Arbeitsweise eines solchen Mähdreschers 1 wird nachfolgend beschrieben. Das Erntegut 3 wird zunächst von einem Schneidwerk 2 aufgenommen, das das Erntegut 3 einem Schrägförderer 4 zuführt. Der Schrägförderer 4 übergibt das Erntegut 3 in seinem rückwärtigen Bereich an die Dreschorgane 6, 7, 8 des Tangentialdreschwerks 5.

Am Eingang des Tangentialdreschwerks 5 befindet sich eine Vorbeschleunigertrommel 6, der in Gutflussrichtung eine Dreschtrommel 7 nachgeordnet ist. Untenseitig werden die Vorbeschleunigertrommel 6 und die Dreschtrommel 7 wenigstens teilweise von einem Dreschkorb 8 ummantelt.

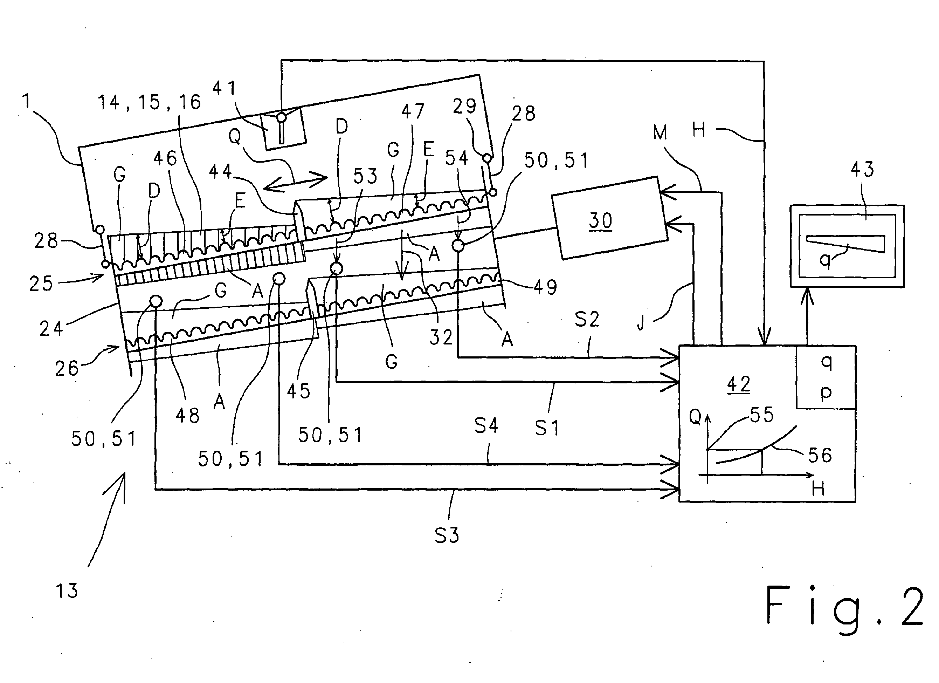

Das aus dem Schrägförderer 4 austretende Erntegut 3 wird durch die Vorbeschleunigertrommel 6 erfasst und weiter von der Dreschtrommel 7 durch den zwischen der Dreschtrommel 7 und dem Dreschkorb 8 ausgebildeten Dreschspalt 9 gezogen. Dabei bearbeitet die Dreschtrommel 7 das Erntegut 3 mechanisch in dessen Folge ein Korn-Spreu-Gemisch 11 am Dreschkorb 8 abgeschieden und über einen schwingend angetriebenen Vorbereitungsboden 12 der Reinigungseinrichtung 13 zugeführt wird, um die Körner von den Nichtkornbestandteilen, d. h. von Halm - und Spreuteilen, zu trennen.
Vom Dreschwerk 5 gelangt der im wesentlichen aus ausgedroschenen Halmen bestehende Gutstrom 17 über die entgegen dem Uhrzeigersinn rotierende Wendetrommel 18 auf den Hordenschüttler 19, der den Gutstrom 17 in den rückwärtigen Bereich des Mähdreschers 1 fördert. Dabei werden die noch im Gutstrom 17 befindlichen Körner 14 sowie eventuell Kurzstroh 15 und Spreu 16 abgetrennt, indem sie durch den Hordenschüttler 19 hindurch auf einen Rücklaufboden 21 fallen. Der Rücklaufboden 21 transportiert Körner 14, Kurzstroh 15 und Spreu 16 zum Vorbereitungsboden 12. Die Körner 14, das Kurzstroh 15 und die Spreu 16 gelangen schließlich ebenfalls über den Vorbereitungsboden 12 in die Reinigungseinrichtung 13.
Die Reinigungseinrichtung 13 besteht aus einem Gebläse 23 und einem als Siebkasten 24 ausgeführten Förder- und Reinigungsorgan 20. Der Siebkasten 24 wird von einem Obersieb 25, einem Untersieb 26 und dem Körnerrücklaufboden 27 gebildet. Der Siebkasten 24 ist über vier Lenker 28, an deren Enden Kugelgelenklager 29 angeordnet sind, annähernd horizontal in alle Richtungen beweglich im Mähdrescher 1 gelagert. Über zwei schematisch dargestellte, aus der DE 199 08 696 bekannte und daher hier nicht näher erläuterte miteinander gekoppelte Schwingantriebe 30 wird der Siebkasten 24 gemäß der Figuren 1 und 2 gleichzeitig zu einer Längsschwingung L und einer Querschwingung Q angeregt.

Die Längsschwingung L beschleunigt den Erntegutstrom 14, 15, 16 entgegengesetzt zur Fahrtrichtung des Mähdreschers 1, um ihn über die Siebe 25, 26 in den hinteren Bereich des Mähdreschers 1 zu fördern. Die Querschwingung Q (siehe Fig. 2) beschleunigt den Erntegutstrom 14, 15, 16 quer zur Fahrtrichtung des Mähdreschers 1, damit der bei der Hangfahrt des Mähdreschers 1 hangabwärts geglittene Erntegutstrom 14, 15, 16 gleichmäßig auf die Breite der Siebe 25, 26 verteilt wird. Die Längsschwingung L und die Querschwingung Q weisen unterschiedliche Schwingfrequenzen auf, wobei ein Phasenversatz zwischen den Schwingfrequenzen über eine an sich bekannte und daher hier nicht näher erläuterte Phasenversatzverstelleinrichtung variierbar ist. Bei einem ganzzahligen Verhältnis der Schwingfrequenzen kann durch die Verstellung des Phasenversatzes die Querschwingung Q derart verstellt werden, dass sich die Bewegungsrichtung des Erntegutstroms 14, 15, 16 auf den Sieben 25, 26 ändert.
Die Abscheidung des Ernteguts 14, 15, 16, das heißt die Trennung der Körner 14 vom Kurzstroh 15 und Spreu 16 erfolgt in der Weise, dass durch die Sieböffnungen 34, 35 im Obersieb 25 und im Untersieb 26 mittels des Gebläses 23 ein Luftstrom von unten nach oben hindurchgefördert wird, welcher den über die Siebe 25, 26 in den hinteren Bereich des Mähdreschers 1 geführten Erntegutstrom auflockert und für das Heraustrennen der spezifisch leichteren Spreu- und Kurzstrohanteile 15, 16 sorgt, während die schweren Erntegutkörner 14 durch die Sieböffnungen 34, 35 fallen. Die Siebe 25, 26 sind teilweise übereinander angeordnet, so dass das Erntegut 14, 15, 16 in zwei Stufen unterschiedlich fein gesiebt wird, wobei die Sieböffnungen 34, 35 der Siebe 25, 26 über Stellglieder 57, 58 verstellbar sind. Das Obersieb 25 ist in der Regel so ausgeführt, dass es in seinem rückwärtigen Bereich, dem sogenannten Überkehrbereich 36, eine größere Maschenweite aufweist.
Unterhalb des Obersiebs 25 ist im Überkehrbereich 36 eine später noch näher beschriebene Körnerstrommesseinrichtung 37 angeordnet, um die Querabscheidung A (siehe Fig. 2) eines durch die Sieböffnungen 34 des Obersiebes 25 hindurchgefallenen Siebdurchgangs 32 zu bestimmen. Unterhalb der ersten Körnerstrommesseinrichtung 37 kann eine zweite Körnerstrommesseinrichtung 38 am Ende des Untersiebs 26 angeordnet sein, die eine Querabscheidung A eines über das Untersieb 26 geförderten Siebüberlaufs 40 und/oder des durch die Sieböffnungen 34 des Obersiebes 25 hindurchgefallenen Siebdurchgangs 32 bestimmt. Des weiteren kann am Ende des Obersiebs 25 eine dritte Körnerstrommesseinrichtung 39 angeordnet sein, mit der die Querabscheidung A eines nicht durch das Obersieb 25 hindurchgefallenen Siebverlusts 33 bestimmt werden kann. Die Körnerstrommesseinrichtungen 37, 38, 39 sind jeweils in einem Bereich der Siebe 25, 26 angeordnet, in dem die Verteilung des Erntegutes 14, 15, 16 auf die gesamte Breite der Siebe 25, 26 durch die Querschwingung Q des Schwingantriebs 30 bereits erfolgt ist.
Zusätzlich ist am Mähdrescher 1 ein Querneigungssensor 41 angeordnet, der auf an sich bekannte Weise die Querneigung des Mähdreschers 1 und damit die Querneigung der Förder- und Reinigungseinrichtung 20 sensiert.
Die Körnerstrommesseinrichtungen 37, 38, 39 und der Schwingantrieb 30 sind mit einer Steuereinheit 42 verbunden, mit der die Querschwingung Q des Schwingantriebs 30 auf noch näher zu beschreibende Weise in Abhängigkeit von der Querabscheidung A änderbar ist. In der Kabine des Mähdreschers 1 ist eine mit der Steuereinheit 42 gekoppelte Anzeigeeinheit 43 und ein mit der Steuereinheit 42 gekoppeltes Bedienfeld angeordnet.

Fig.2 zeigt einen Ausschnitt einer Heckansicht eines Mähdreschers 1 bei der Erntefahrt am Hang. Ober- und Untersieb 25, 26 sind in Längsrichtung des Mähdreschers 1 durch Begrenzungen 44, 45 in jeweils zwei Siebhälften 46, 47, 48, 49 geteilt. Durch die geneigte Lage des Mähdreschers 1 rutscht das auf den Sieben 25, 26 geförderte Erntegut 14, 15, 16 durch die Schwerkraft hangabwärts, was zu ungleichverteilten, in der Figur schematisch dargestellten Gutverteilungen G des Ernteguts 14, 15, 16 auf den Siebhälften 46, 47, 48, 49 führt. Die ungleichmäßige Gutverteilung G bedingt im Bereich hoher Gutschichtdicke D einen geringen Abscheideeffekt am Erntegut 14, 15, 16 im Vergleich zu einem Bereich mit geringer Gutschichtdicke E in dem ein hoher Abscheideeffekt erzielt wird, so dass die Reinigungseinrichtung 13 nicht überall effizient arbeitet. Über die Breite jeder Siebhälfte 46, 47, 48, 49 ergibt sich hieraus eine ungleichverteilte, in der Figur 2 schematisch dargestellte Querabscheidung A, deren Kurvenverlauf durch die Geometrie der zugehörigen Gutverteilung G bestimmt wird. Ziel der erfindungsgemäßen Vorrichtung ist es, durch die Querschwingung Q eine gleichverteilte Gutverteilung G, das heißt jeweils eine homogene Gutschichtdicke über die Breite der Siebhälfte 46, 47, 48, 49 zu erreichen, die zu einem gleich großen Abscheideeffekt führt, so dass die Querabscheidung A über die Breite der Siebhälfte 46, 47, 48, 49 konstant ist.
Unterhalb des Obersiebes 25 ist eine Körnerstrommesseinrichtung 37 angeordnet, die aus mehreren Impulsdichtesensoren 50 besteht, wobei unter jeder Siebhälfte 46, 47 des Obersiebs 25 jeweils zwei Impulsdichtesensoren 50 quer zur Fahrtrichtung des Mähdreschers 1 angeordnet sind.
Bei den Impulsdichtesensoren 50 handelt es sich um an sich bekannte und deshalb hier nicht näher erläuterte Stabsensoren 51, die in dem Siebdurchgang 32 enthaltene Körnerströme 53, 54 detektieren. Die Stabsensoren 51 erzeugen durch den Körperschall beim Auftreffen der Körnerströme 53, 54 Körnerstromsignale S1, S2, S3, S4, die sich proportional zu den Körnerströmen 53, 54 ändern.
Der Querneigungssensor 41 erzeugt ein Neigungssignal H, das sich proportional zur Änderung der Neigung des Mähdreschers 1 am Hang ändert.
Die von den Stabsensoren 51 erzeugten Körnerstromsignale S1, S2, S3, S4 und das von dem Querneigungssensor 41 erzeugte Neigungssignal H werden an die Steuereinheit 42 übergeben.

Die Steuereinheit 42 ordnet den Körnerstromsignalen S1, S2 eine erste in der Steuereinheit 42 gespeicherte Abscheidekurve q zu, deren Verlauf der Querabscheidung A der rechten Siebhälfte 47 des Obersiebs 25 entspricht. Weiterhin ordnet die Steuereinheit 42 den Körnerstromsignalen S3, S4 eine zweite, ebenfalls in der Steuereinheit 42 gespeicherte Abscheidekurve p zu, deren Verlauf der Querabscheidung A der linken Siebhälfte 46 des Obersiebs 25 entspricht. Die Abscheidekurven q, p können beispielsweise durch empirische Versuchsreihen ermittelt worden sein, sie geben den Körnerdurchsatz entlang der Breite der Siebhälfte 46, 47 an.

Im erfindungsgemäßen Verfahrens regelt die Steuereinheit 42 die Querschwingung Q des Förder- und Reinigungsorgans 20 automatisch in Abhängigkeit von der Neigung des Mähdreschers 1 grob vor. Die Steuereinheit 42 generiert in Abhängigkeit von dem Neigungssignal H ein Steuerbefehlsignal J mit dem die Querschwingung Q des Förder- und Reinigungsorgans 20 auf einen Querschwingungs-Sollwert 55 voreingestellt wird, der in einer Kennlinie 56 in der Steuereinheit 42 gespeichert ist. Anschließend regelt die Steuereinheit 42 bei annähernd konstanter Hangneigung die Querschwingung Q automatisch in Abhängigkeit von der Querabscheidung A der rechten Siebhälfte 47 des Obersiebs 25 nach, wobei das vom Neigungssignal H generierte Steuerbefehlsignal J übersteuert wird. Die Übersteuerung erfolgt automatisch in Abhängigkeit wenigstens eines weiteren Parameters wie beispielsweise der Fahrgeschwindigkeit des Mähdreschers 1. Die Steuereinheit 42 generiert in Abhängigkeit von den Querabscheidung A ein Steuerbefehlsignal M mit dem die Querschwingung Q des Förder- und Reinigungsorgans 20 derart geregelt wird, so dass die Querabscheidung A konstant ist.
In einer weiteren Ausführung des erfindungsgemäßen Verfahrens regelt die Steuereinheit 42 die Querschwingung Q derart, das die Querabscheidung A sowohl der rechten Siebhälfte 47 des Obersiebs 25 als auch die Querabscheidung A der linken Siebhälfte 46 des Obersiebs 25 jeweils konstant sind.

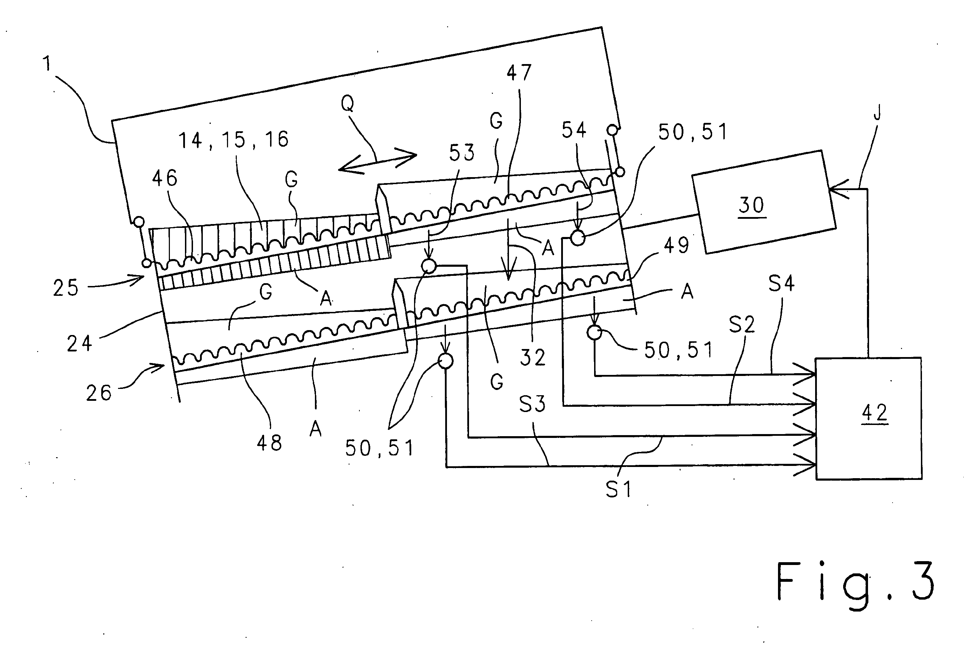

Fig. 3 zeigt die Heckansicht einer Reinigungseinrichtung 13 mit einer dritten Ausführungsform der erfindungsgemäßen Vorrichtung. Bei dieser Vorrichtung sind unter den untereinander angeordneten Siebhälften 47, 49 des Obersiebs 25 und des Untersiebs 26 jeweils zwei Stabsensoren 51 positioniert, so dass die Querverteilung A der rechten Siebhälfte 47 des Obersiebs 25 und die Querverteilung A der darunter liegenden rechten Siebhälfte 49 des Untersiebs 26 ermittelt werden.

Wenn die Sieböffnungen 35 des Untersiebs 26 bei einer ersten Einstellung der Maschenweiten beispielsweise weit geöffnet sind, kann die Regelung der Querschwingung Q entweder in Abhängigkeit von der Querverteilung A der rechten Siebhälfte 47 des Obersiebs 25 oder von der Querverteilung A der darunter liegenden rechten Siebhälfte 49 des Untersiebs 26 erfolgen.

Es liegt im Rahmen des Könnens eines Fachmannes die beschriebenen Ausführungsbeispiele in nicht dargestellter Weise abzuwandeln oder in anderen Maschinensystemen einzusetzen, um die beschriebenen Effekte zu erzielen, ohne dabei den Rahmen der Erfindung, wie sie in den Ansprüchen wiedergegeben ist, zu verlassen.

### Bezugszeichenliste:

- 1: Mähdrescher
- 2: Schneidwerk
- 3: Erntegut
- 4: Schrägförderer
- 5: Tangentialdreschwerk
- 6: Vorbeschleunigertrommel
- 7: Dreschtrommel
- 8: Dreschkorb
- 9: Dreschspalt
- 11: Korn-Spreu-Gemisch
- 12: Vorbereitungsboden
- 13: Reinigungseinrichtung
- 14: Körner
- 15: Halmteile
- 16: Spreuteile
- 17: Gutstrom
- 18: Wendetrommel
- 19: Hordenschüttler
- 20: Förder- u. Reinigungsorgan
- 21: Rücklaufboden
- 23: Gebläse
- 24: Siebkasten
- 25: Obersieb
- 26: Untersieb
- 27: Körnerrücklaufboden
- 28: Lenker
- 29: Kugelgelenklager
- 30: Schwingantrieb
- 32: Siebdürchgang
- 33: Siebverlust
- 34: Sieböffnung
- 35: Sieböffnung
- 36: Überkehrbereich
- 37: Erste Körnerstrommesseinrichtung
- 38: Zweite Körnerstrommesseinrichtung
- 39: Dritte Körnerstrommesseinrichtung
- 40: Siebüberlauf
- 41: Querneigungssensor
- 42: Steuereinheit
- 43: Anzeigeeinheit
- 44: Begrenzung
- 45: Begrenzung
- 46: Siebhälfte
- 47: Siebhälfte
- 48: Siebhälfte
- 49: Siebhälfte
- 50: Impulsdichtesensor
- 51: Stabsensoren
- 52: Bediener
- 53: Körnerstrom
- 54: Körnerstrom
- 55: Querschwingungs-Sollwert
- 56: Kennlinie
- 57: Stellglied
- 58: Stellglied
- A: Querabscheidung
- B: Arbeitsbreite
- D: hohe Gutschichtdicke
- E: geringe Gutschichtdicke
- G: Gutverteilung
- H: Querneigungssignal
- J: Steuerbefehlssignal
- L: Längsschwingung
- M: Steuerbefehlssignal
- Q: Querschwingung
- S1: Körnerstromsignal
- S2: Körnerstromsignal
- S3: Körnerstromsignal
- S4: Körnerstromsignal
- p: Abscheidekurve
- q: Abscheidekurve

## Patentansprüche

1. Verfahren zur Abscheidung wenigstens eines Erntegutstromes (14, 15, 16) auf wenigstens einem Förder- und Reinigungsorgan (20) eines Mähdreschers (1), wobei das Förder- und Reinigungsorgan (20) von wenigstens einem Schwingantrieb (30) zu einer Längsschwingung (L) und zu einer Querschwingung (Q) angeregt wird, wobei
die Querschwingung (Q) in Abhängigkeit von der Querabscheidung (A) des Erntegutstromes (14, 15, 16) änderbar ist, **dadurch gekennzeichnet, dass** die Querschwingung (Q) in Abhängigkeit von der Neigung des Mähdreschers (1) vorgeregelt und anschließend in Abhängigkeit von der Querabscheidung (A) feingeregelt wird.

2. Verfahren zur Abscheidung wenigstens eines Erntegutstromes (14, 15, 16) nach Anspruch 1,
**dadurch gekennzeichnet,**
**dass** die Querabscheidung (A) an einem oder an mehreren Sieben (25, 26) des Förder- und Reinigungsorgans (20) durch einen oder mehrere Sensoren (50) ermittelt wird, wobei die Sensoren (50) quer zur Gutflussrichtung des Ernteguts (14, 15,16) entlang der Arbeitsbreite (B) des Förder- und Reinigungsorgans (20) angeordnet sind.

3. Verfahren zur Abscheidung wenigstens eines Erntegutstromes (14, 15, 16) nach Anspruch 2,
**dadurch gekennzeichnet,**
**dass** die Sensoren (50) Körnerströme (53, 54) im Bereich der Siebe (25, 26) der Förder- und Reinigungseinrichtung (20) detektieren.

4. Verfahren zur Abscheidung wenigstens eines Erntegutstromes (14, 15, 16) nach Anspruch 3,
**dadurch gekennzeichnet,**
**dass** die Körnerströme (53, 54) in einem Bereich der Siebe (25, 26) gemessen werden, in dem die Gutverteilung (G) des Erntegutes (15, 16) über die Breite der Siebe (25, 26) bereits erfolgt ist.

5. Verfahren zur Abscheidung wenigstens eines Erntegutstromes (14, 15, 16) nach Anspruch 3 oder 4,
**dadurch gekennzeichnet,**
**dass** den Kömerströmen (53, 54) eine Abscheidekurve (q, p) zugeordnet wird, die der Querabscheidung (A) entspricht.

6. Verfahren zur Abscheidung wenigstens eines Erntegutstromes (14, 15, 16) nach wenigstens einem der vorhergehenden Ansprüche,
**dadurch gekennzeichnet,**
**dass** die Querschwingung (Q) automatisch gesteuert wird.

7. Vorrichtung zur Abscheidung wenigstens eines Erntegutstromes (14, 15, 16) auf wenigstens einem Förder- und Reinigungsorgan (20) eines Mähdreschers (1), wobei das Förder- und Reinigungsorgan (20) von wenigstens einem Schwingantrieb (30) zu einer Längsschwingung (L) und einer Querschwingung (Q) angeregt wird,
**dadurch gekennzeichnet,**
**dass** der Mähdrescher (1) wenigstens eine Körnerstrommesseinrichtung (37, 38, 39) zur Bestimmung der Querabscheidung (A) des Erntegutstromes (14, 15, 16) und eine Steuereinheit (42) zum Steuern der Querschwingung (Q) umfasst und die Steuerung (42) die Querschwingung (Q) in Abhängigkeit von der Querabscheidung (A) regelt, wobei die Steuereinheit (42) in Abhängigkeit von der Hangneigung des Mähdreschers (1) auf einen Querschwingungs-Sollwert (55) voreingestellt und anschließend bei annähernd konstanter Hangneigung in Abhängigkeit von der Querabscheidung (A) ein Steuerbefehlssignal (M) generiert mit dem die Querschwingung (Q) des Förder- und Reinigungsorgans (20) feineingestellt wird, so dass die Querabscheidung (A) konstant ist.

8. Vorrichtung zur Abscheidung wenigstens eines Erntegutstromes (14, 15, 16) nach Anspruch 7;
**dadurch gekennzeichnet,**
**dass** die Körnerstrommesseinrichtung (37, 38, 39) mehrere Impulsdichtesensoren (50) umfasst.

9. Vorrichtung zur Abscheidung wenigstens eines Erntegutstromes (14, 15, 16) nach Anspruch 8,
**dadurch gekennzeichnet,**
**dass** die Impulsdichtesensoren (50) Stabsensoren (51) sind.

10. Vorrichtung zur Abscheidung wenigstens eines Erntegutstromes (14, 15, 16) nach Anspruch 9,
**dadurch gekennzeichnet,**
**dass** die Stabsensoren (51) Körnerstromsignale (S1, S2, S3, S4) generieren, die im wesentlichen proportional zu den Kömerströmen (53, 54) sind.

11. Vorrichtung zur Abscheidung wenigstens eines Erntegutstromes (14, 15, 16) nach wenigstens einem der vorhergehenden Ansprüche,
**dadurch gekennzeichnet;**
**dass** die Hangneigung des Mähdreschers (1) über wenigstens einen Querneigungssensor (41) erfasst wird, der ein Querneigungssignal (H) generiert, das im wesentlichen proportional zur Neigung der Förder- und Reinigungseinrichtung (20) ist.

12. Vorrichtung zur Abscheidung wenigstens eines Erntegutstromes (14, 15, 16) nach wenigstens einem der vorhergehenden Ansprüche,
**dadurch gekennzeichnet;**
**dass** die Förder- und Reinigungseinrichtung aus zumindest einem Obersieb (25) und zumindest einem Untersieb (26) gebildet wird, die mit verstellbaren Sieböffnungen (34, 35) versehen sind, wobei die Sieböffnungen (34, 35) in Abhängigkeit von der Querabscheidung (A) über Stellglieder (57, 58) einstellbar sind.

13. Vorrichtung zur Abscheidung wenigstens eines Erntegutstromes (14, 15, 16) nach Anspruch 12,
**dadurch gekennzeichnet;**
**dass** dem Obersieb (25) ein Überkehrbereich (36) zugeordnet ist und die Körnerstrommesseinrichtung (37) in dem Überkehrbereich (36) des Obersiebs (25) unterhalb des Obersiebs (25) angeordnet ist.

14. Vorrichtung zur Abscheidung wenigstens eines Erntegutstromes (14, 15, 16) nach wenigstens einem der vorhergehenden Ansprüche,
**dadurch gekennzeichnet;**
**dass** die Körnerstrommesseinrichtung (39) am Ende des Obersiebs (25) unterhalt des Obersiebs (25) angeordnet ist.

15. Vorrichtung zur Abscheidung wenigstens eines Erntegutstromes (14, 15, 16) nach wenigstens einem der vorhergehenden Ansprüche,
**dadurch gekennzeichnet;**
**dass** die Körnerstrommesseinrichtung (39) am Ende des Untersiebs (26) unterhalb des Untersiebs (26) angeordnet ist.

## Claims

1. A method of separating at least one crop material flow (14, 15, 16) on at least one conveyor and cleaning member (20) of a combine harvester (1), wherein the conveyor and cleaning member (20) is actuated to produce a longitudinal oscillation (L) and a transverse oscillation (Q) by at least one oscillation drive (30), wherein the transverse oscillation (Q) can be varied in dependence on the transverse separation (A) of the crop material flow (14, 15, 16), **characterised in that** the transverse oscillation (Q) is pre-regulated in dependence on the inclination of the combine harvester (1) and is then finely regulated in dependence on the transverse separation (A).

2. A method of separating at least one crop material flow (14, 15, 16) according to claim 1 **characterised in that** the transverse separation (A) is ascertained at one or more sieves (25, 26) of the conveyor and cleaning member (20) by one or more sensors (50), wherein the sensors (50) are arranged transversely to the material flow direction of the crop material (14, 15, 16) along the working width (B) of the conveyor and cleaning member (20).

3. A method of separating at least one crop material flow (14, 15, 16) according to claim 2 **characterised in that** the sensors (50) detect grain flows (53, 54) in the region of the sieves (25, 26) of the conveyor and cleaning device (20).

4. A method of separating at least one crop material flow (14, 15, 16) according to claim 3 **characterised in that** the grain flows (53, 54) are measured in a region of the sieves (25, 26) in which material distribution (G) of the crop material (15, 16) over the width of the sieves (25, 26) has already been effected.

5. A method of separating at least one crop material flow (14, 15, 16) according to claim 3 or claim 4 **characterised in that** associated with the grain flows (53, 54) is a separation curve (q, p) corresponding to the transverse separation (A).

6. A method of separating at least one crop material flow (14, 15, 16) according to at least one of the preceding claims **characterised in that** the transverse oscillation (Q) is automatically controlled.

7. Apparatus for separating at least one crop material flow (14, 15, 16) on at least one conveyor and cleaning member (20) of a combine harvester (1), wherein the conveyor and cleaning member (20) is actuated to produce a longitudinal oscillation (L) and a transverse oscillation (Q) by at least one oscillation drive (30),
**characterised in that**
the combine harvester (1) includes at least one grain flow measuring device (37, 38, 39) for determining the transverse separation (A) of the crop material flow (14, 15, 16) and a control unit (42) for controlling the transverse oscillation (Q) and the control (42) regulates the transverse oscillation (Q) in dependence on the transverse separation (A), wherein the control unit (42) is preset in dependence on the slope inclination of the combine harvester (1) to a transverse oscillation reference value (55) and then with an approximately constant slope inclination in dependence on the transverse separation (A) generates a control command signal (M) with which the transverse oscillation (Q) of the conveyor and cleaning member (20) is finely set so that the transverse separation (A) is constant.

8. Apparatus for separating at least one crop material flow (14, 15, 16) according to claim 7 **characterised in that** the grain flow measuring device (37, 38, 39) includes a plurality of pulse density sensors (50).

9. Apparatus for separating at least one crop material flow (14, 15, 16) according to claim 8 **characterised in that** the pulse density sensors (50) are bar sensors (51).

10. Apparatus for separating at least one crop material flow (14, 15, 16) according to claim 9 **characterised in that** the bar sensors (51) generate grain flow signals (S1, S2, S3, S4) substantially proportional to the grain flows (53, 54).

11. Apparatus for separating at least one crop material flow (14, 15, 16) according to one of the preceding claims **characterised in that** the slope inclination of the combine harvester (1) is detected by way of at least one transverse inclination sensor (41) generating a transverse inclination signal (H) which is substantially proportional to the inclination of the conveyor and cleaning device (20).

12. Apparatus for separating at least one crop material flow (14, 15, 16) according to one of the preceding claims **characterised in that** the conveyor and cleaning device is formed from at least one upper sieve (25) and at least one lower sieve (26) which are provided with adjustable sieve openings (34, 35), wherein the sieve openings (34, 35) are adjustable by way of adjusting members (57, 58) in dependence on the transverse separation (A).

13. Apparatus for separating at least one crop material flow (14, 15, 16) according to claim 12 **characterised in that** a tailings region (36) is associated with the upper sieve (25) and the grain flow measuring device (37) is arranged in the tailings region (36) of the upper sieve (25) below the upper sieve (25).

14. Apparatus for separating at least one crop material flow (14, 15, 16) according to at least one of the preceding claims **characterised in that** the grain flow measuring device (39) is arranged at the end of the upper sieve (25) below the upper sieve (25).

15. Apparatus for separating at least one crop material flow (14, 15, 16) according to at least one of the preceding claims **characterised in that** the flow measuring device (39) is arranged at the end of the lower sieve (25) below the lower sieve (26).

## Revendications

1. Procédé de séparation d'au moins un flux de produit récolté (14, 15, 16) sur au moins un organe d'acheminement et de nettoyage (20) d'une moissonneuse-batteuse (1), dans lequel l'organe d'acheminement et de nettoyage (20) est actionné par au moins un entraînement oscillant (30) en une oscillation longitudinale (L) et une oscillation transversale (Q), dans lequel
l'oscillation transversale (Q) est modifiable en fonction de la séparation transversale (A) du flux de produit récolté (14, 15, 16), **caractérisé en ce que** l'oscillation transversale (Q) est préréglée en fonction de l'inclinaison de la moissonneuse-batteuse (1) et ensuite réglée avec précision en fonction de la séparation transversale (A).

2. Procédé de séparation d'au moins un flux de produit récolté (14, 15, 16) selon la revendication 1,
**caractérisé en ce que**
la séparation transversale (A) est détectée au niveau d'un ou de plusieurs cribles (25, 26) de l'organe d'acheminement et de nettoyage (20) par un ou plusieurs capteurs (50), les capteurs (50) étant agencés transversalement à la direction d'écoulement de produit du produit récolté (14, 15, 16) le long de la largeur de travail (B) de l'organe d'acheminement et de nettoyage (20).

3. Procédé de séparation d'au moins un flux de produit récolté (14, 15, 16) selon la revendication 2,
**caractérisé en ce que**
les capteurs (50) détectent des flux de grains (53, 54) dans la zone des cribles (25, 26) du dispositif d'acheminement et de nettoyage (20).

4. Procédé de séparation d'au moins un flux de produit récolté (14, 15, 16) selon la revendication 3,
**caractérisé en ce que**
les flux de grains (53, 54) sont mesurés dans une zone des cribles (25, 26), dans laquelle la répartition (G) du produit récolté (15, 16) s'est déjà effectuée sur la largeur des cribles (25, 26).

5. Procédé de séparation d'au moins un flux de produit récolté (14, 15, 16) selon la revendication 3 ou 4,
**caractérisé en ce qu'**
aux flux de grains (53, 54) est associée une courbe de séparation (q, p), qui correspond à la séparation transversale (A).

6. Procédé de séparation d'au moins un flux de produit récolté (14, 15, 16) selon au moins l'une des revendications précédentes,
**caractérisé en ce que**
l'oscillation transversale (Q) est commandée de manière automatique.

7. Procédé de séparation d'au moins un flux de produit récolté (14, 15, 16) sur au moins un organe d'acheminement et de nettoyage (20) d'une moissonneuse-batteuse (1), dans lequel l'organe d'acheminement et de nettoyage (20) est actionné par au moins un entraînement oscillant (30) en une oscillation longitudinale (L) et une oscillation transversale (Q),
**caractérisé en ce que**
la moissonneuse-batteuse (1) comprend au moins un dispositif de mesure de flux de grains (37, 38, 39) permettant de déterminer la séparation transversale (A) du flux de produit récolté (14, 15, 16) et une unité de commande (42) permettant de commander l'oscillation transversale (Q) et la commande (42) règle l'oscillation transversale (Q) en fonction de la séparation transversale (A), dans laquelle l'unité de commande (42) est préréglée en fonction de l'inclinaison de pente de la moissonneuse-batteuse (1) sur une valeur théorique d'oscillation transversale (55) et ensuite pour une inclinaison de pente à peu près constante en fonction de la séparation transversale (A) un signal d'instruction (M) est généré avec lequel l'oscillation transversale (Q) de l'organe d'acheminement et de nettoyage (20) est réglée avec précision, de sorte que la séparation transversale (A) est constante.

8. Dispositif de séparation d'au moins un flux de produit récolté (14, 15, 16) selon la revendication 7,
**caractérisé en ce que**
le dispositif de mesure de flux de grains (37, 38, 39) comprend plusieurs capteurs de densité d'impulsion (50).

9. Dispositif de séparation d'au moins un flux de produit récolté (14, 15, 16) selon la revendication 8,
**caractérisé en ce que**
les capteurs de densité d'impulsion (50) sont des capteurs à baguette (51).

10. Dispositif de séparation d'au moins un flux de produit récolté (14, 15, 16) selon la revendication 9,
**caractérisé en ce que**
les capteurs à baguette (51) génèrent des signaux de flux de grains (S1, S2, S3, S4) qui sont pour l'essentiel proportionnels aux flux de grains (53, 54).

11. Dispositif de séparation d'au moins un flux de produit récolté (14, 15, 16) selon au moins l'une des revendications précédentes,
**caractérisé en ce que**
l'inclinaison de pente de la moissonneuse-batteuse (1) est détectée par le biais d'au moins un capteur d'inclinaison transversale (41), qui génère un signal d'inclinaison transversale (H), qui est pour l'essentiel proportionnel à l'inclinaison du dispositif d'acheminement et de nettoyage (20).

12. Dispositif de séparation d'au moins un flux de produit récolté (14, 15, 16) selon au moins l'une des revendications précédentes,
**caractérisé en ce que**
le dispositif d'acheminement et de nettoyage est formé d'au moins un crible supérieur (25) et d'au moins un crible inférieur (26), qui sont pourvus d'ouvertures de crible (34, 35) ajustables, dans lequel les ouvertures de crible (34, 35) sont réglables en fonction de la séparation transversale (A) par le biais de composants de réglage (57, 58).

13. Dispositif de séparation d'au moins un flux de produit récolté (14, 15, 16) selon la revendication 12,
**caractérisé en ce qu'**
au crible supérieur (25) est associé une zone de retour (36) et le dispositif de mesure de flux de grains (37) est agencé dans la zone de retour (36) du crible supérieur (25) en dessous du crible supérieur (25)

14. Dispositif de séparation d'au moins un flux de produit récolté (14, 15, 16) selon au moins l'une des revendications précédentes,
**caractérisé en ce que**
le dispositif de mesure de flux de grains (39) est agencé à l'extrémité du crible supérieur (25) en dessous du crible supérieur (25).

15. Dispositif de séparation d'au moins un flux de produit récolté (14, 15, 16) selon au moins l'une des revendications précédentes,
**caractérisé en ce que**
le dispositif de mesure de flux de grains (39) est agencé à l'extrémité du crible inférieur (26) en dessous du crible inférieur (26).
